# EUROPÄISCHE PATENTSCHRIFT

(11) **EP 2 521 825 B1**
(45) Veröffentlichungstag und Bekanntmachung des Hinweises auf die Patenterteilung: **11.10.2017**
(21) Anmeldenummer: 10737238.5
(22) Anmeldetag: 29.06.2010
(51) Int. Cl.: E04C 2/12, E04C 2/38

(54) **HOLZSTRUKTURELEMENT**
WOODEN STRUCTURAL ELEMENT
ÉLÉMENT STRUCTURAL EN BOIS

(30) Priorität: 19.08.2009 CH 13142009; 19.08.2009 CH 13162009; 19.08.2009 CH 13152009; 30.06.2009 CH 10112009
(43) Veröffentlichungstag der Anmeldung: 14.11.2012
(73) Patentinhaber: Gisler Holzbau, 9608 Ganterschwil (CH)
(72) Erfinder: GISLER, Hans, CH-9630 Wattwil (CH)
(74) Vertreter: Stocker, Kurt
(86) Internationale Anmeldenummer: PCT/CH2010/000165
(87) Internationale Veröffentlichungsnummer: WO 2011/000120

(56) Entgegenhaltungen:
- WO-A1-2007/048149
- CH-A- 148 837
- CH-A- 205 265
- DE-C- 931 005
- FR-A- 710 286
- FR-A- 761 493
- GB-A- 379 170
- US-A- 2 354 725

## Beschreibung

Die Erfindung betrifft ein Holzstrukturelement gemäss dem Oberbegriff von Anspruch 1.

In der Vergangenheit herrschte die Meinung vor, dass ein massiver Baustoff bzw. massive Bauelemente, insbesondere aus Holz, abgesehen vom Gewicht überall die besseren Eigenschaften haben gegenüber kombinierten oder zusammengesetzten Strukturelementen. Dies wurde lange auch angenommen in Bezug auf die Wärmedämmung. In der jüngeren Zeit wurden vermehrt Halbfabrikate als Mehrschichtaufbauten entwickelt, welche in vielen Anwendungsbereichen sich durchsetzen konnten. Sowohl in Bezug auf die Stabilität wie auch auf die Wärmedämmung war früher die Dicke einer Platte ein erstes Kriterium. Erst in jüngster Zeit konnten mit Verbundstrukturen neue Wege beschritten werden, welche nicht zuletzt dank neuesten Fabrikationsmitteln mit höchsten Produktionsgeschwindigkeiten preisgünstig eine bessere Wärmedämmung und genügende Stabilität für die betreffende Anwendung aufweisen.

In der Folge werden verschiedene Einsatzgebiete von Holzlamellenlängsprofilen im Stande der Technik beschrieben. Die WO 2007 / 048 149 schlägt eine neuartige Bauplatte auf der Basis von Holz oder Holzwerkstoffen vor. Das Ziel war dabei, Struktur-, Wandungs-, Verkleidungs-, Trägerelemente oder dergleichen mit einem Mehrschichtaufbau mit wesentlich reduziertem Gewicht herzustellen und gleichzeitig mit verbesserten Festigkeits-, Schall- und Wärmedämmwerten, ferner mit günstigen physikalischen bautechnischen, bauphysikalischen und baubiologischen Eigenschaften. Als erstes Ziel galt die Verwendung von gewachsenen Hölzern bzw. auf solchen beruhenden Holzwerkstoffen mit guter Benutzerqualität, Umweltfreundlichkeit, biologischer Abbaubarkeit und hoher Entsorgungsqualität. Als Lösung wird eine Mehrschichtplatte vorgeschlagen, bei der eine Schrägfaser-Kernschicht und eine Vielzahl die selbe voll durchsetzen, zur jeweiligen schrägen Faserrichtung parallelen, vorzugsweise untereinander gleich grossen und vorzugsweise gleichmässig verteilt angeordneten, positiv-schrägen und/oder negativschrägen Schräghohlräumen aufweist. Der Nachteil bei dieser Lösung liegt darin, dass die Wärmedämmung schlechter ist im Vergleich zu einer Vollholzplatte, da die Schräghohlräume direkt von der einen zu anderen Plattenseiten verlaufen.

Die AT-Patentschrift 397 489 schlägt ein Brettschichtholz vor, welches aus verleimten Lamellen zusammengesetzt ist, in denen eine Vielzahl von Entspannungsnuten vorgesehen sind. Das Brettschichtholz ist aus Lamellen zusammengesetzt, deren Höhe grösser ist als die bekannte maximale Lamellendicke von 45 mm und der Abstand zwischen den Nuten bzw. einer Nut und einer Lamellenbegrenzungsfläche nicht grösser ist als 35 mm.

Die USPS 1 877 087 zeigt eine Holzwand mit beidseitig einer Deckplatte sowie dazwischen einen Elementaufbau aus vielen Einzelelementen, in welche über die ganze Länge von beiden Seiten her je ein Ventilationsspalt angebracht ist. Die Wärmedämmung ist bei den zitierten Druckschriften zum Teil schlechter als bei Vollholz.

In der Folge wird auf die DE 100 27 462 Bezug genommen, welche ein wärmeisolierendes Holzbauelement, insbesondere Rahmenkanteln für Fenster oder Türen vorschlägt. Richtigerweise führt die DE 100 27 462 aus, dass im Bereich der Energiesparhäuser und Niedrigenergiehäuser, bzw. Passivhäuser alle Elemente, die den Wärmeverlust vom inneren des Haus an die Umgebung beeinflussen, bezüglich der Wärmedurchlässigkeit optimiert werden müssen. Dabei werden sowohl die Aussenwände, bzw. die Fassadenkonstruktionen als auch die Türen und Fenster so ausgebildet, dass der Wärmeverlust möglichst minimal ist.

Ein Fenster umfasst in einem grossen Teil der Fälle einen Flügelrahmen und einen Stockrahmen, wobei der Stockrahmen gebäudeseitig befestig ist und den Flügelrahmen mehrheitlich schwenkbar hält. Bei einem geschlossenen Fenster liegt der Flügelrahmen formschlüssig am Stockrahmen an. Der Wärmefluss quer zur Fenster- bzw. Rahmenebene durch den Flügelrahmen, durch den Stockrahmen und durch überlappende bereiche beider Rahmen soll minimal werden. Weil die Wärmedämmeigenschaft vor allem von der Dicke und vom Material der Rahmenteile bzw. Rahmenkantel abhängt, könnte bei einem ausgewählten Rahmenmaterial die Wärmedämmung durch eine Erhöhung der Dicke der Rahmenkantel erhöht werden. Das äussere Erscheinungsbild von Fenstern oder Türen setzt aber der Vergrösserung des Schenkelquerschnitts der Stock- und Flügelrahmen vergleichsweise enge Grenzen. Ähnliches gilt bei Fenstern ohne Fensterflügel. Die DE 100 27 462 geht aus von einem wärmeisolierenden Holzbauelement, insbesondere Rahmenkantel, das sich entlang einer Längsachse erstreckt und in einer ersten Richtung quer dazu einen reduzierten Wärmeleitkoeffizienten aufweist. Es wird vorgeschlagen, dass im Holzbauelement mindestens ein abgeschlossener, schlitzförmiger Hohlraum (13) ausgebildet ist, der sicht entlang der Längsrichtung und senkrecht zur ersten Richtung erstreckt.

Aus der DE 199 16 218 und der DE 199 04 963 sind Lösungen bekannt, gemäss denen der Wärmeübergang ohne Vergrösserung des Schenkelquerschnittes verringert werden kann. Bei diesen Lösungen wird an einem Schenkel bzw. Rahmenkantel mit einem Abdeckprofil in dem vom Abdeckprofil abgedeckten Bereich eine Wärmedämmleiste und eine Wärmedämmmatte in einer Aussparung angeorndet. Die dabei entstehenden Rahmen umfassen somit zumindest drei verschiedenen Materialien. Der komplizierte Aufbau und die Tatsache, dass für eine sinnvolle Entsorgung ein grosser Trennaufwand entsteht, sind Nachteile dieser Lösungen. Es versteht sich von selbst, dass bei Türen analoge Probleme zu den Fenstern bestehen. Auch wenn kein Flügelrahmen, der geöffnet werden kann, vorhanden ist, bleibt der Stockrahmen, der aus wärmeisolierenden Holzbauelementen aufgebaut werden kann.

Vollholzhüllenkonstruktionen, beispielsweise als Block- oder Strickbau, waren früher oft der einzige Garant für einen winterlichen Wärmeschutz. Den heutigen Bedürfnissen können solche Konstruktionen mit einer Wandstärke von 80 mm bis 120 mm nicht mehr genügen. Es ist bekannt, dass Menschen Wohnräume in Vollholzkonstruktionen als angenehm wahrnehmen. Innentemperaturen und Luftfeuchtigkeit sind in einer guten Balance, sofern nicht durch übermässiges Heizen die Luft ausgetrocknet wird. Bestrebungen, sich heutigen Herausforderungen, wie schonendem Umgang mit Ressourcen zu stellen, bedingen eine permanente Suche nach neuen Lösungsansätzen im Bereich Wärmedämmung von Gebäuden. Optimierungspotential in der Gebäudehüllenkonstruktion ist vorhanden, indem Wechselwirkungen von Wärmeleitfähigkeit, Wärmespeicherung, Feuchtigkeitstransport und Feuchtigkeitsgehalt in eine gute Balance gebracht werden. Es muss somit eine Zielsetzung sein, in Zukunft Gebäudeholzhüllen mit verbesserten Wärmedämmeigenschaften bevorzugt regional herzustellen. Dabei sollte man neben der Seitenware (Fichten / Weisstannen) auch Laubhölzer wie Buche verwenden können. Die Multifunktionalität von Massivholz betreffend Statik, Wärmedämmung, Energiespeicherung, Schallschutz und Brandschutz soll möglichst ganzheitlich ins Spiel gebracht werden.

In jüngerer Zeit sind vermehrte Bestrebungen im Gange, anstelle der älteren Fachwerkbauten vorfabrizierte Wand- und Decken-Bodenelemente zu verwenden. Diese werden als Elemente verlegt, oder die Elemente werden direkt auf der Baustelle als Elementverbund zu ganzen Gebäuden zusammengebaut. Eine besondere Schwierigkeit stellen dabei die Verbindungsmittel für den Elementverbund dar. Die DOS 197 43 905 schlägt dafür Schlossscheiben zur kraftschlüssigen Verbindung von je zwei aufeinanderstossenden Elementen vor. Jedes der Elemente ist im Inneren mit Isolationsmaterial vollgepresst, wobei die Aussenhülle durch massive, in den Randbereichen durch Kanthölzer verbundene Platten gebildet ist. Der Nachteil solcher Lösungen liegt darin, dass für die Herstellung entsprechender Strukturelemente beachtlich viel Handarbeit zum Teil auf der Baustelle erforderlich ist. Selbst nach sorgfältigem Einbau des Isolationsmaterials besteht keine Gewähr, dass dieses nach längerer Zeit nicht in sich zusammensackt und örtlich die Isolationswirkung verschlechtert wird.

Die DE 196 04 433 schlägt eine Vakuumverleimte Schichtholzplatte vor. Es wird von einer Brettschichtholzplatte, mit einer Vielzahl flach aufeinanderliegend gestapelter Holzschichten, die an paarweise benachbarten Flachseiten miteinander flächig, insbesondere vollflächig, verklebt sind, ausgegangen, wobei zumindest ein Teil paarweise benachbarter Holzschichten quer oder senkrecht zueinander, verlaufende Faserrichtungen haben. Aufgabe war eine Schichtholzplatte der oben beschriebenen Art anzugeben, bei der die Verteilung des Klebstoffs optimiert ist. Die neue Lösung ist dadurch gekennzeichnet, dass zumindest ein Teil der paarweise benachbarten und miteinander verklebten Flachseiten jeweils mit einer Vielzahl im wesentlichen in Faserrichtung und etwa parallel verlaufenden Nuten versehen sind, derart, dass zumindest in einem Teil der mit quer zueinander verlaufenden Faserrichtungen paarweise einander benachbarten Holzschichten die Nuten der benachbarten Flachseiten sich kreuzen. Der grosse Nachteil bei dieser Lösung liegt darin, dass zwar die Verleimung verbessert, jedoch gleichzeitig die Wärmdämmung verschlechtert wird.

Durch die FR 761 493 ist ein Verfahren bekannt geworden, bei dem durch gegenseitige Einfräsungen ein im Querschnitt mäanderförmiger Holzsteg erzielt wird. Dieser wird an seinen Aussenseiten mit einem Wandabschnitt bedeckt, welcher die Einfräsungen verschliesst.

Aus der CH 205 265 ist weiter eine abgesperrte Holzplatte bekannt geworden. Diese besteht aus einer Mittellage, die abwechslungsweise von der einen und anderen Seite her ausgeführte und zueinander parallele Sägeschnitte ausweist. Diese Mittellage ist auf beiden Seiten mit Deckfurnieren versehen, welche die Sägeschnitte verschliessen.

GB 379 170 A zeigt ebenfalls Platten mit Lagen, die abwechslungsweise von der einen und anderen grossen Aussenfläche her ausgeführte und zueinander parallele Sägeschnitte ausweisen. An beiden Aussenflächen dieser Lagen sind jeweils Deckfurniere angeordnet.

Der Erfindung wurde nun die Aufgabe zugrunde gelegt, ein leichtes Lamellenelement zu schaffen, das möglichst vielseitig verwendbar ist und vor allem im Verbund als Strukturelement besser ist gegenüber den Lösungen des Standes der Technik und einen hohen Schall- und Wärmedämmwert, insbesondere höher als derjenige von Massivholz, aufweist.

Der Erfindung wurde ferner für den Bereich Fenster und Türen die Aufgabe zugrunde gelegt, ein Holzbauelement zu entwickeln, das erlaubt, Wärmedämmwerte zu erreichen, welche in den Bereich von Mehrfachverglasungen kommen, und einen tiefen U- bzw. K-Wert gewährleisten, einfach aufgebaut und mit kleinem Aufwand ökologisch sinnvoll entsorgbar sind. Zudem soll dessen Lebensdauer ohne Abfall der Dämmwerte und der Stabilität möglichst gross sein.

Eine Teilaufgabe lag ferner darin, insbesondere leichte Strukturelemente mit höchster Stabilität und Wärmedämmwirkung zu schaffen, bei denen die Isolationswirkung auch über Zeiträume von Jahrzehnten und mehr unverändert erhalten bleibt. Dabei sollen die Strukturelemente preisgünstig herstellbar sein und am Einsatzort mit möglichst wenig Handarbeit schnell aufgebaut werden können.

Die erfindungsgemässe Lösung ist durch die Merkmale des Anspruchs 1 gekennzeichnet, wobei das Lamellenelement als Lamellenlängsprofil ausgebildet ist, wobei beidseitig angeordneten Nuten oder Schlitze bzw. Luftschlitzen je gegenseitig versetzt angeordnet und das Lamellenlängsprofil mit der sich bildenden Vielzahl von dünnen Lamellen bzw. Stegen handorgelartig aussen verbunden sind, wobei die Dicke (d") der Lamellen bzw. Stege (2) und des entsprechenden Luftschlitzes 1-5 mm beträgt.

Vom Erfinder ist erkannt worden, dass für ein Holzlamellenlängsprofil in Längen von 0,4 bis 5 m der Gedanke eines in sich stabilen Elementes bzw. Balkens fallengelassen werden muss, so dass das Lamellenelement erst in Kombination mit irgendeinem Trägersystem eine je erforderliche Stabilität erhält. Das hat den grossen Vorteil, dass die Lamellenelemente bzw. Lamellenlängsprofile in wenigen Grössen hergestellt werden können, welche mit verschiedenartigen Strukturelementen kombinierbar und anpassbar sind. Mittels Hochleistungs-produktionsmaschinen können wenige Standardelemente hergestellt und die Längen der Elemente der jeweiligen Verwendung angepasst werden. Weil das Lamellenelement handorgelartig leicht verformbar ist, passt es sich leichter an die geometrische Form eines Strukturelementes an. Trotz leichten Ungenauigkeiten kann es gut in ein Kastengebilde eines Wandelementes oder einer Platte eingepasst und/oder eingeleimt werden. Ganz besonders bevorzugt sollen die Lamellenelemente aus gut ausgetrocknetem Holz sein, bzw. hergestellt werden.

Die Erfindung gestattet eine ganze Anzahl besonders vorteilhafter Ausgestaltungen. Es wird dazu auf die abhängigen Ansprüche Bezug genommen.

Die Nuten und Lamellen bzw. Stege bilden in je entgegengesetzter Richtung offene, rechteckförmige oder spitzwinklige Luftschlitze, wobei je zwei benachbarte Stege durch äussere Stegkanten verbunden sind. Erst im Einbau bzw. in der Kombination mit Strukturelementen bilden die offenen Luftschlitze kleine geschlossene Luftkammern. Da im Falle des Einsatzes für eine gute Wärmedämmung die geschlossenen Luftkammern quer zur Hauptwärmedämmrichtung angeordnet werden und eine Vielzahl von kleinen geschlossenen Luftkammern bilden, entsteht bei Strukturelementen und Platten aber auch im Bereich von Türen und Fenstern eine überraschend hohe Wärme- und Schalldämmwirkung.

Vollholzhüllenkonstruktionen, beispielsweise als Block- oder Strickbau, waren früher oft der einzige Garant für einen winterlichen Wärmeschutz. Den heutigen Bedürfnissen können solche Konstruktionen mit einer Wandstärke von 80 mm bis 120 mm nicht mehr genügen. Es ist bekannt, dass Menschen Wohnräume in Vollholzkonstruktionen als angenehm wahrnehmen. Innentemperaturen und Luftfeuchtigkeit sind in einer guten Balance, sofern nicht durch übermässiges Heizen die Luft ausgetrocknet wird. Bestrebungen, sich heutigen Herausforderungen, wie schonendem Umgang mit Ressourcen zu stellen, bedingen eine permanente Suche nach neuen Lösungsansätzen, vor allem im Bereich Wärmedämmung von Gebäuden. Es soll Optimierungspotential in der Gebäudehüllenkonstruktion erreicht werden, wobei auch Wechselwirkungen von Wärmeleitfähigkeit, Wärmespeicherung, Feuchtigkeitstransport und Feuchtigkeitsgehalt in einer guten Balance gesucht werden sollen.

Die neue Lösung gestattet für die Holzlamellenlängsprofile neben der Seitenware (Fichten / Weisstannen) auch Laubhölzer wie Buche zu verwenden. Die Multifunktionalität von Massivholz betreffend Statik, Wärmedämmung, Energiespeicherung, Schallschutz und Brandschutz soll möglichst ganzheitlich ins Spiel gebracht werden.

Eine ganz besondere Eigenheit der neuen Lamellenlängsprofil liegt darin, dass die offenen Schlitze senkrecht zur "Handorgelrichtung", vorzugsweise bis zur Aufhebung in einer oder beiden offenen Schlitzseiten zusammenpressbar sind. Keine der Lösungen des Standes der Technik zeigt eine entsprechende Flexibilität. Im Falle, dass das Lamellenelement in einem Strukturelement verleimt wird, entsteht ein profilartiger oder flächiger oder räumlicher Verbund mit den umgebenden Teilen z.B. eines Strukturelementes.

Die Nuten eines Lamellenlängsprofiles werden bevorzug in einem Durchgang durch beidseitigen Eingriff mit einem Verbund von Kreissägeblättern entsprechend der Anzahl und Teilung der Nuten in einem Fräsvorgang hergestellt.

Das Lamellenelement wird aus Holz hergestellt und weist eine Breite von 4 cm bis 20 cm, besonders vorzugsweise im Bereich zwischen 5 cm bis 15 cm und eine Länge von 0,5 m bis 5 m auf. Es entstehen dadurch handliche Elemente für das Handling in der weiteren Verarbeitung, aber auch für den Versand. Die Brettdicke aus dem das Lamellenelement hergestellt ist, hat eine Dicke von mehr als 1 cm bis zu 5 cm und mehr.

Besonders für den Einsatz für ein Kastenelement weist das Holzlamellenlängsprofil wenigsten auf einer Seite ein Rückenelement auf. Als optimale Lösung weisen die Lamellen bzw. Stege des Lamellenelementes eine Dicke auf, die etwa der Dicke (d") der entsprechenden Längsschlitze bzw. Luftschlitze entspricht, wobei die Dicke (d") der Lamellen bzw. Stege und des entsprechenden Luftschlitzes bevorzugt etwa 1 bis 3 mm beträgt. Das Lamellenelement als Dämmmaterial kann für den inneren Aufbau für Wärmedämmplatten oder Wärmedämmelemente oder für Strukturelemente im Bereich der Wände und der Fenster oder als Akustikelement verwendet werden.

Ferner kann es in gerundeter Form eingesetzt werden, sei es für einen Einsatz für eine ästhetische Wirkung oder als Verkleidung, beispielsweise von Säulen oder funktionell zur entsprechenden Formgebung für Beton, wenn eine gerundete Form erwünscht ist. Hier kann, beispielsweise durch Ausstreichen mit Gips eine stabile Betonseite, hergestellt werden.

Das Strukturelement weist eingelegte Lamellenelemente für den Bereich Fenster oder Türen mit einer Vielzahl von in Längsrichtung sich erstreckenden Luftschlitzen auf, und ist gekennzeichnet durch einen Kasten bzw. ein kastenartiges, geschlossenes Strukturelement und darin eingelegten Lamellenelementen mit dünnen Lamellen und je gegenseitig angeordneten schmalen Schlitzen, welche zusammen und mit dem Kasten eine Vielzahl von geschlossenen Luftkammern bilden.

Für besonders vorteilhafte Ausgestaltungen wird auf die Ansprüche 4 bis 6 Bezug genommen.

Vom Erfinder ist erkannt worden, dass bei Fenstern, wie auch bei Innen- wie Aussentüren noch wesentliche Verbesserungen möglich sind. Das Ziel war dabei im Bereich:
- der Fenster und Aussentüren die Wärmedämmung sowie Schallisolierung zu verbessern,
- und im Bereich der Innentüren, besonders der Wohnungstüren bei niederen Ansprüchen ein leichtes Gewicht und auch die Stabilität zu verbessern.

Die Untersuchungen haben gezeigt, dass mit der neuen Erfindung diese Ziele erreicht werden und damit die Aufgabe gelöst werden kann in erster Linie durch die volle Nutzung der Lammellenelemente mit einer Vielzahl von geschlossenen Kammern. Die schmalen Luftkammern weisen die Form eines Rechteckes auf, wobei die schmale Rechteckseite quer zur Dämmrichtung angeordnet ist, so dass eine maximale Anzahl Wärme- und Schalldämmsprünge entstehen.

Ein wichtiges Kriterium ist das Gewicht der fertigen Türe sowie die mechanische Stabilität der Türe in Bezug auf die Verhinderung eines langfristigen Verziehens der Türe, z.B. wenn die Feuchtigkeit innen und aussen unterschiedlich ist. Das besondere liegt hier darin, dass eine Vielzahl von Lamellenelementen zwischen eine Innenschale sowie einer Aussenschale eingeleimt werden. Die Innen- und Aussenschale kann einlagig oder zweilagig ausgebildet werden.

Das Strukturelement soll mit eingesetzten Lamellenelementen einen bestmöglichen Wärmedurchleitungs- koeffizient erreichen. Dazu weisen die einzelnen geschlossenen Luftkammern einen etwa rechteckförmigen oder spitzwinkligen Querschnitt auf, wobei die kürzere Abmessung der Rechteckform in der Hauptwärmedämmrichtung ausgerichtet ist und mit der Vielzahl der Luftkammern in Wärmedämmrichtung sich eine hohe Wärmedämmwirkung ergibt.

Ein bevorzugter Anwendungsfall liegt darin, dass das Strukturelement als Tür- oder Fensterrahmen ausgebildet ist mit umfassenden Rahmenelemente oder als Fensterrahmenverbreiterung mit eingepassten Lamellenelementen.

In der konkreten Ausgestaltung entstehen dabei beim Einsatz als Wärmedämmelement in Wärmedämmrichtung z.B. 6 -10 oder mehr einzelne in sich geschlossene Luftkammern, für jedes Lamellenelement durch welche der Wärmefluss hindurch muss. Die Luftkammern, da sie in Wärmeflussrichtung möglichst schmal ausgebildet werden, haben nahezu keine innere Luftzirkulation, so dass der Wärmeverlust minimalisiert ist. Das Konzept des neuen Holzbauelementes kann für einen Tür- oder Fensterrahmen ausgebildet werden, mit vier umfassenden Rahmenelementen mit eingepassten Lamellenelementen. Ferner kann es als Fensterflügelrahmen ausgebildet sein, mit vier umfassenden Rahmenelementen mit je eingepassten Lamellenelemente.

Das neue Wärmedämmkonzept erlaubt nicht nur eine optimale Wärmedämmung eines einzelnen schmalen Strukturelementes, sondern in der Vielfachanwendung der Lamellenelemente im Bereich der geschlossenen Türfläche als Türblatt bzw.

Wärmedämmblatt und/oder als Rahmelemente auszubilden, mit je eingepassten Lamellenelementen. Die in den Strukturelementen eingepassten Lamellenelemente können eingeleimt werden und gemeinsam eine hohe Stabilität aufweisen, mit einer Wärmeleitfähigkeit etwa entsprechend einer Mehrfachverglasung.

Ein Holz- Strukturelement mit hoher Wärmedämmung für den Bereich von Gebäudefassaden und/oder Dächern und/oder Zwischendecken und/oder Wänden weist einen Kasten auf, in welchen ein oder mehrere Lamellenelemente mit einer Vielzahl von beidseitig und versetzt angeordneten, schmalen Längsschlitzen eingelegt sind, und zusammen und mit dem Kasten eine entsprechende Vielzahl von geschlossenen kleinen Luftkammern bilden, wobei die einzelnen kleinen Luftkammern einen etwa rechteckförmigen oder spitzwinkligen Querschnitt aufweisen und die kürzere Abmessung der Luftkammern in der Hauptwärmedämmrichtung ausgerichtet ist, so dass in der Vielzahl der geschlossenen, kleinen Luftkammern eine Luftzirkulation unterbunden und sich eine hohe Wärmedämmwirkung ergibt.

Vom Erfinder ist erkannt worden, das im Stande der Technik in Bezug auf die beiden Anforderungen:
- höchste Stabilität und
- höchste Wärmedämmwirkung
nur jeweils die eine Anforderung erfüllt werden konnte, zum Nachteil der jeweils anderen.

Im Stande der Technik ist der Wärmeverlust durch innere Konvektion vielfach vernachlässigt worden. Konvektion (= Mitführung) bedeutet die Übertragung von Wärme durch materielle Träger wie bewegte Flüssigkeiten oder Luft. Genau hier setzt die neue Erfindung ein. Es ist eine Tatsache, dass eine freie Luftbewegung durch Temperaturunterschiede einen minimalen Raum voraussetzt. Dadurch, dass gemäss der neuen Erfindung nur enge Luftkammern zwischen den schmalen Längsschlitzen in den Lamellenelementen bzw. Lamellenlängsprofilen vorgesehen sind, wird die Bewegung der Luft in den engen Luftkammern und damit der Wärmetausch über die Konvektion nahezu unterbunden. Mit der Vielzahl von Längsschlitzen in der Hauptwärmedämmrichtung ergibt sich zusätzlich eine Vielzahl von Sprüngen, von Luftkammern zu Luftkammer und damit eine massive Hemmung für den Wärmefluss. Unterstützt wird dies ferner durch die Ausgestaltung von dünnen Lamellen. Dies senkt die Wärmeleitung in den Lamellen. Erfindungsgemäss wird die Luft als maximaler Dämmfaktor benutzt. Im Verbund der Lamellenelemente mit einem geschlossenen Kasten ergibt sich eine überraschend hohe Stabilität für das ganze Strukturelement.

Die erfindungsgemässen Bauelemente verfügen über sehr gute Wärmedämm- und Schalldämmeigenschaften. Das Dämmelement kann aus verschiedenen Materialien hergestellt werden, wie Holz, Faserstoffe oder Verbundwerkstoffe. Dank den Luftschlitzen werden vor allem die Wärmedämmwerte (Lambda-Werte) und Schalldämmwerte gegenüber herkömmlichen Produkten maximiert. Die Wärmedämmwerte verbessern sich, je geringer die Schlitzdicke ist. Durch die Schlitze werden ebenfalls eine Materialersparnis und eine Gewichtsreduzierung erreicht. Infolge dieser Eigenschaften ergibt sich eine Anwendung des Elementes im Bereich Wärmedämmung, Wärmespeicherung, Schalldämmung in Baukonstruktionen oder in Produkten, wo solche Eigenschaften verlangt werden. Maximale Wärmedämmwerte werden erreicht, wenn die erfindungsgemässen Elemente so zusammengesetzt werden, dass im Kasten eine Vielzahl von geschlossenen Luftkammern entsteht. Diese verlaufen in der Ebene eines Bauteils oder einer Platte derart, dass der Wärmefluss durch den Holzkörper möglichst oft durch Luftkammern unterbrochen wird.

Das Lamellenelement kann in zusammengesetzter oder verleimter Form verwendet werden. Die Lamellenelemente werden mit einem äusseren formgebenden, stabilen Kasten als Strukturelement zusammengebracht, so zum Beispiel in eine Ständerkonstruktion als Wand-, Dach- oder Deckenelement. Jedes Lamellenelement bildet mit dem Kasten eine Vielzahl von in sich geschlossenen Luftkammern, welche quer zur Hauptwärmedammrichtung verlaufen.

Die neue Erfindung gestattet für den Bereich Gebäudefassaden Dächer oder Decken eine ganze Anzahl besonders vorteilhafter Ausgestaltungen bzw. Anwendungen.

Das Holzstrukturelement kann als Rahmen oder Platte ausgebildet werden und ist mit einem Umleimer versehen und weist in diesem Fall nur eine Lage von Lamellen auf. Vorteilhafterweise kann gemäss einem weiteren Anwendungsfall als Strukturelement bzw. Platte für ein Stecksystem mit Umleimer für jede Platte in Grössen ausgebildet werden, welche mit Körperkraft händelbar sind. Dies ist besonders dort sehr wichtig, wo z.B. bei einer Fassadenrenovation kein Platz für die Stellung eines Krans vorhanden ist. Die Umleimer werden stirnseitig überstehend bzw. zurückstehend ausgebildet, derart, dass das Strukturelement bzw. die Platten in entsprechendem Stirnbereich zusammensteckbar sind. Bei einem Verbund von einer Vielzahl von Platten für eine ganze Wand werden für eine Wand die einzelnen Platten versetzt angeordnet.

Gemäss einem weiteren Ausgestaltungsgedanken wird das Strukturelement als Deckenelement in der Art eines Deckenbalkens mit vertikalen Plankenbrettern ausgebildet, wobei der Kasten in Längsrichtung geschlossen ausgebildet ist. Die vertikalen Plankenbretter werden seitlich je vorstehend bzw. rückstehend angebracht, derart, dass beim Zusammenfügen einer Vielzahl von Deckenelementen für eine ganze Decke, diese ein Stecksystem bilden.

Gemäss einer weiteren vorteilhaften Ausgestaltung sind mehrere einzelne Deckenelemente als Verbund zusammengefügt sind, wobei die mittleren Planken aufrechtstehende Balken sind, welche mit je zwei Boden- bzw. Deckenbrettern über Nut- und Kamm verbunden sind, wobei die vertikalen Plankenbretter seitlich je vorstehend bzw. rückstehend angebracht sind, derart, dass beim Zusammenfügen einer Vielzahl von Deckenelementen für eine ganze Decke, diese ein Stecksystem bilden.

Für eine Schalldämmung bzw. Schallschutz werden an der Unterseite der Deckenbretter in Längsrichtung eine grössere Anzahl Einschnitten angebracht. Vorteilhafterweise wird der in Ständerbauweise hergestellte Kasten aus Brettern gebildet, wobei die Brettdicke den jeweiligen statischen Anforderungen entsprechend wählbar ist.

Jedes Strukturelement ist zumindest als 3-seitiger Kasten ausgebildet, wobei die vierte Seite durch bauseitig bestimmbares Wandmaterial, beispielsweise Gipsplatten, oder Wandtäfer ausgebildet werden kann. Als vierseitig geschlossener Kasten kann das Holzstrukturelement als Boden- bzw. Deckenelement verwendet werden. Dabei ist es möglich, dass durch entsprechende Endbearbeitung der Boden- und Deckenbretter der ganze Boden bzw. die ganze Decke für die Nutzung fertig sind, also keine zusätzlichen Materialien mehr benötigen.

Vorteilhafterweise wird der Übergang von Strukturelement zu Strukturelement durch Verdübelung oder mittels Federn und / oder Verleimen gemacht, wobei die Fugen jeweils mit Dämmstreifen gedichtet werden können. Das einzelne Lamellenelement ist vor dem Einbau in einen Kasten in der Querebene instabil und erst nach dem Einbau können wesentliche Teile der Last sowie die Stabilität durch beide übernommen werden, wobei im Falle von tragenden Strukturelementen die Lamellenelemente in dem Kasten eingeleimt werden.

Vollholzkonstruktionen, wie Blockhaus- oder Chaletbauten, gibt es seit Jahrzehnten. Diese erfüllen ohne zusätzliche Isolation aber die neuen gesetzlich geforderten Dämmwerte nicht mehr. Das Problem wurde nun mit einer Vielzahl von kleinen Luftkammern gelöst. Der Lambdawert konnte dadurch gegenüber einem normalen Vollholzbau um 50 Prozent verbessert werden. Für die Herstellung mussten Werkzeuge für den Produktionsprozess neu konzipiert werden.

Die neue Erfindung wird nun anhand einiger Ausführungsbeispiele mit weiteren Einzelheiten erläutert. Es zeigen.
- die Figur 1a: ein einfaches Lamellenlängsprofil in perspektivischer Darstellung;
- die Figur 1b: das Lamellenelement gemäss Figur 1 a jedoch mit einem zusätzlichen Rückenelement;
- die Figur 2: vier Beispiele der Stirnseite von konkreten Holzlamellenlängsprofilen;
- die Figuren 3a - 3d: vier Beispiele von einem kurzen Lamellenelement-Musterstück mit und ohne äusserem Krafteingriff:

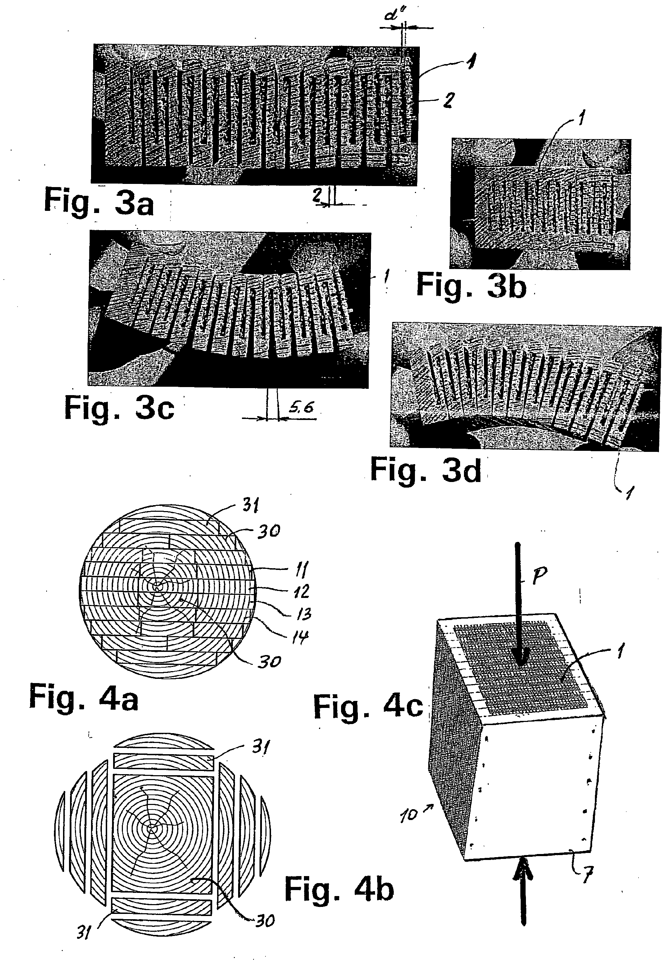

die Figur 3a ohne äussere Belastung,
die Figur 3b total zusammengepresst,
die Figur 3c handorgelartig einseitig zusammengedrückt,
die Figur 3d auf die andere Seite handorgelartig zusammengedrückt;
- die Figur 4a und 4b: eine Darstellung der Holzausnutzung von einem Baumstamm im Sägewerk;
- die Figur 4c: schematisch die vertikale Belastung eines Strukturelementes, welches primär bedingt durch die Kastenkonstruktion sehr stabil ist;

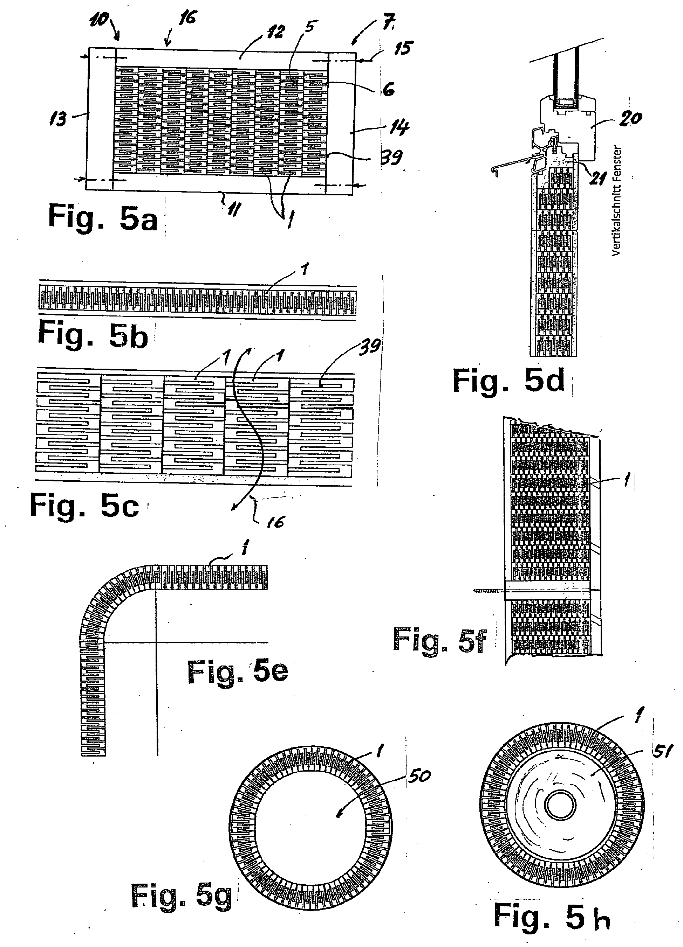

- die Figuren 5a -5h: einige Beispiele für die Verwendung der Holzlamellenlängsprofile, jeweils im Schnitt dargestellt;
die Figur 5a eine Anwendung als Strukturelement im System- und Elementbau in Kombination mit einem vierseitig geschlossenen Kasten,
die Figuren 5b, 5c eine Anwendung gemäss dem Stand der Technik im Plattenleichtbau,
die Figur 5d eine Anwendung im Fenster- und Türbau,
die Figur 5e eine Anwendung gemäss dem Stand der Technik für Akustiksysteme,
die Figur 5f eine Anwendung für Wandverkleidungen,
die Figur 5g eine Anwendung gemäss dem Stand der Technik für eine Betonschalung,
die Figur 5h eine Anwendung gemäss dem Stand der Technik im Verpackungsbereich, beispielsweise für Glas bzw. Flaschen;

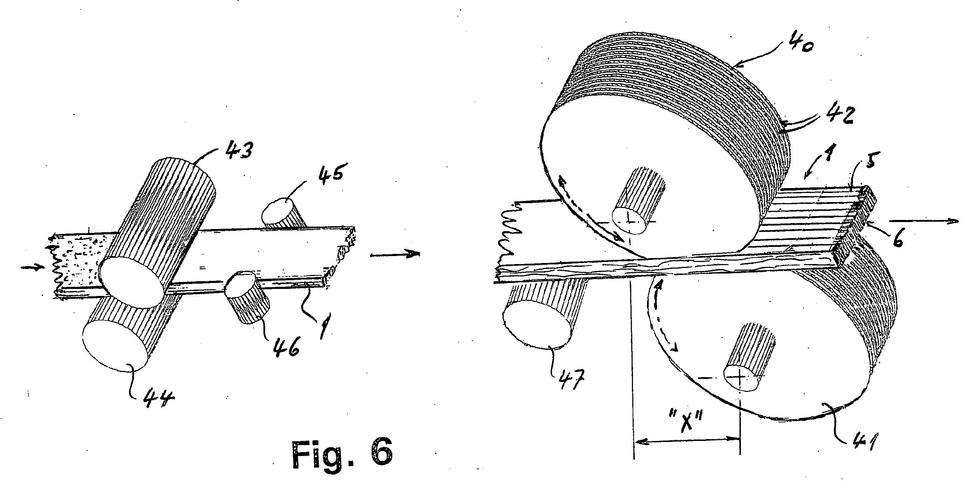

- die Figur 6: zeigt das beidseitige Herstellen der Längsschlitze aus einem rohen Brett in der ganzen Breite eines Lamellenelementes;

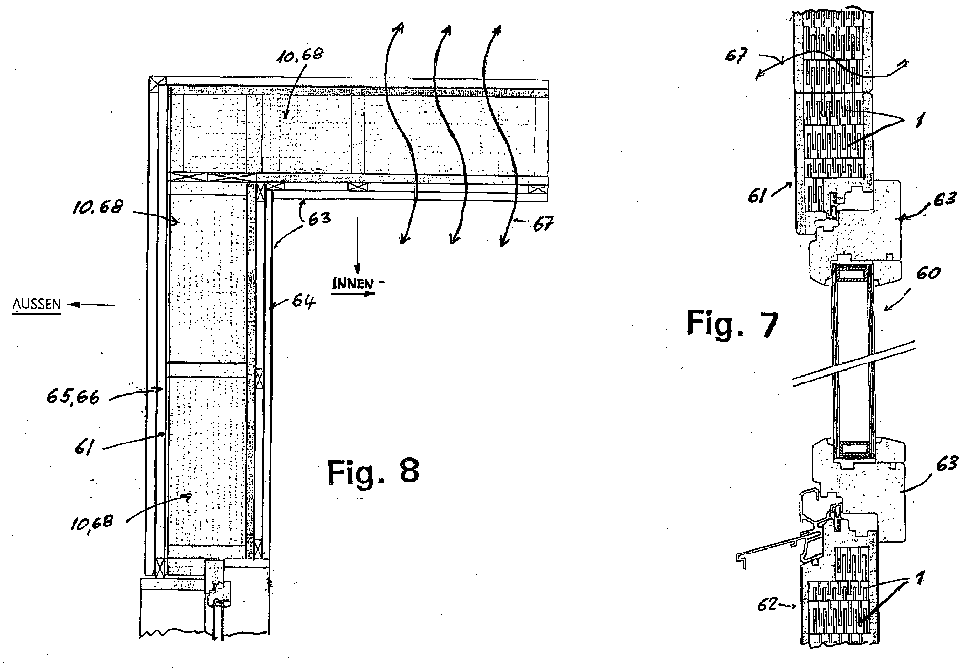

- die Figur 7: einen Vertikalschnitt durch einen Fensterflügeln, wobei das obere und untere Wandelement eingepasste Lamellenelemente aufweist;
- die Figur 8: eine Gebäudeecke,wobei links unten ein Fenster angedeutet ist

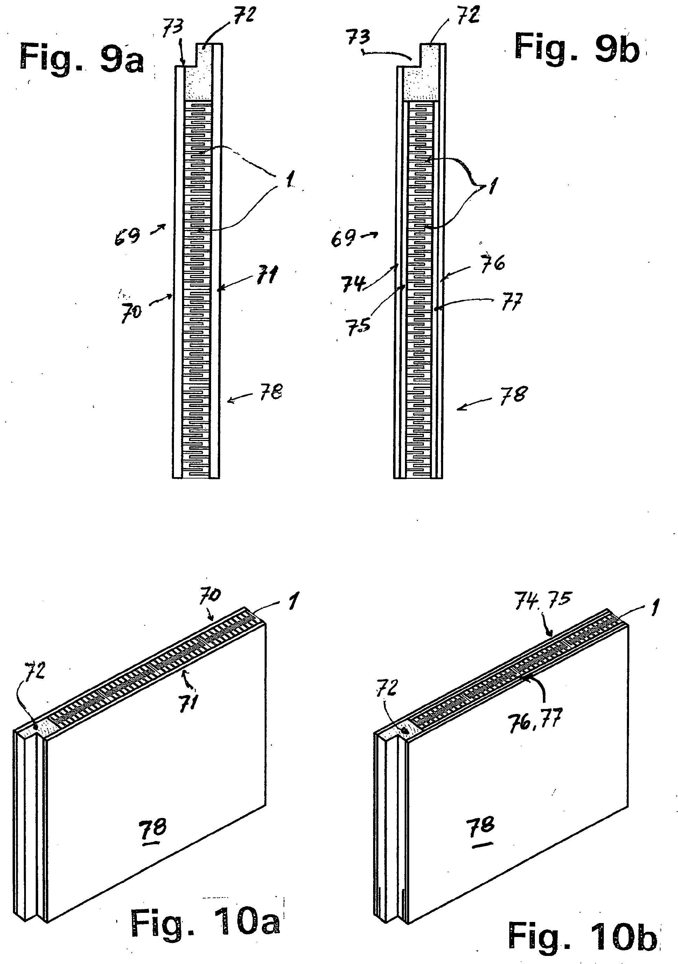

- die Figur 9a und 9b: einen Vertikalschnitt eines Türblattes, 9a mit einlagiger und 9b mit zweilagiger Schale gemäß dem Stand der Technik;
- die Figur 10a und 10b: einen Horizontalschnitt eines Türblattes, 10a mit einlagiger und 10b mit zweilagiger Schale gemäß dem Stand der Technik;

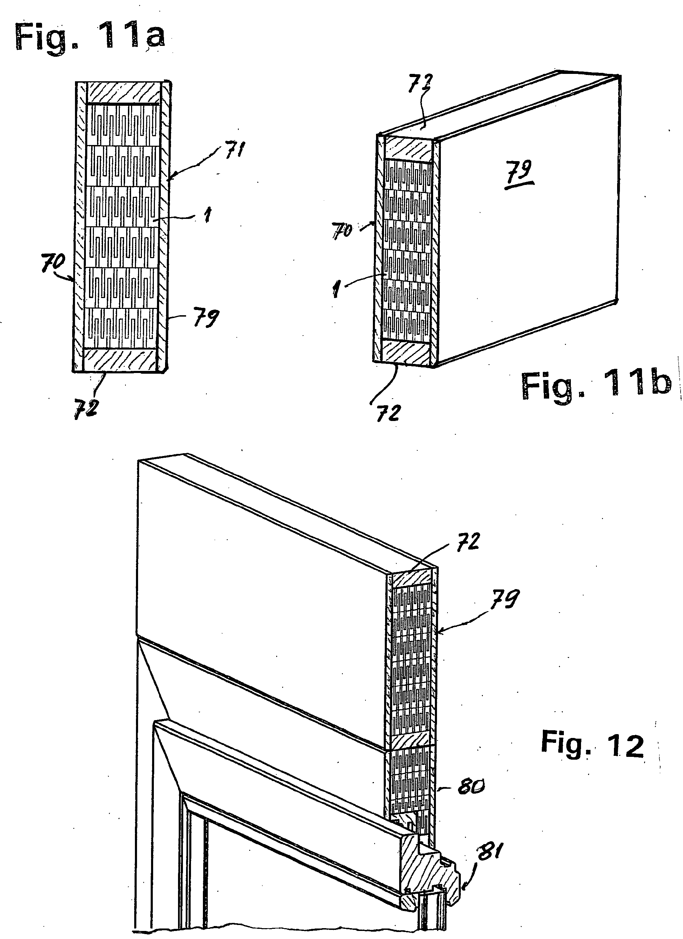

- die Figuren 11a und 11b: eine Seitenansicht bzw. 9b eine perspektivische Darstellung einer Rahmenverbreiterung;
- die Figur 12: einen Ausschnitt eines Fensterrahmens mit Rahmenverbreiterung:

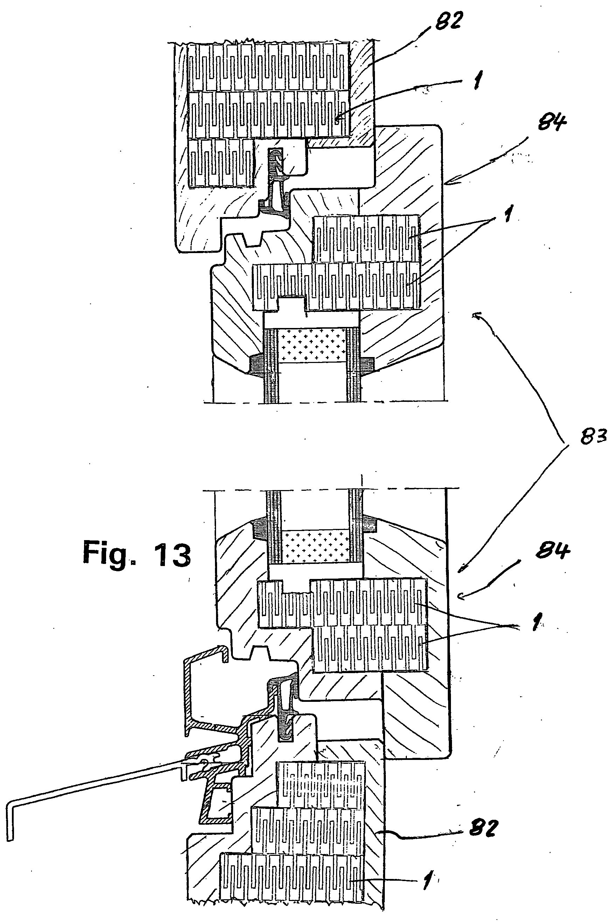

- die Figur 13: einen Schnitt durch einen Fenster- und Flügelrahmen, wobei auch in den Kanteln Lamellenelemente eingeleimt sind.

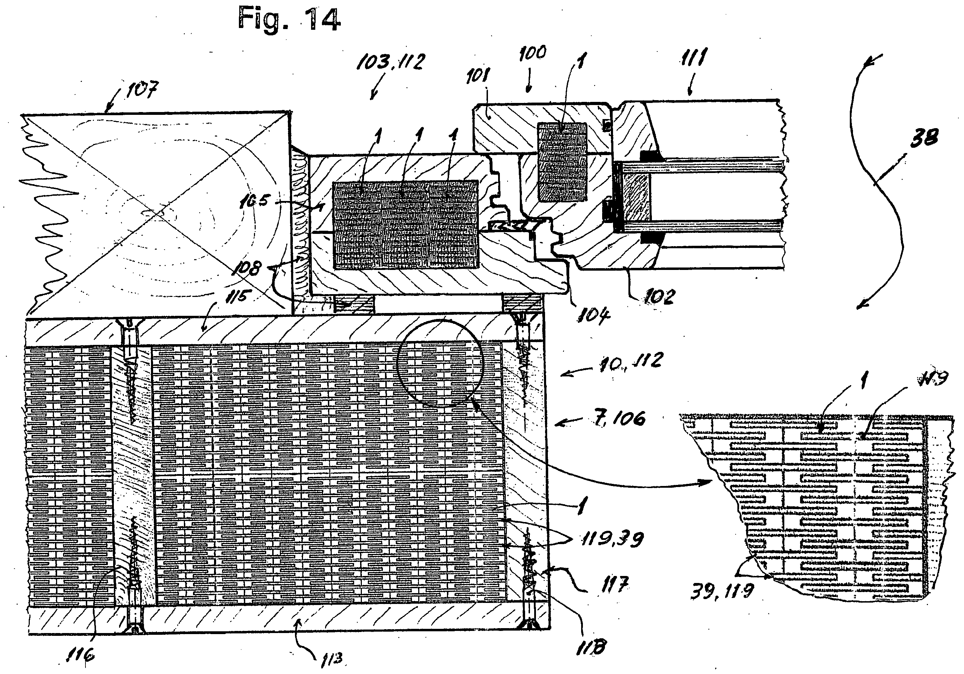

- die Figur 14: eine Anwendung der Lamellenelemente im Bereich Wand- und Fensterbau;

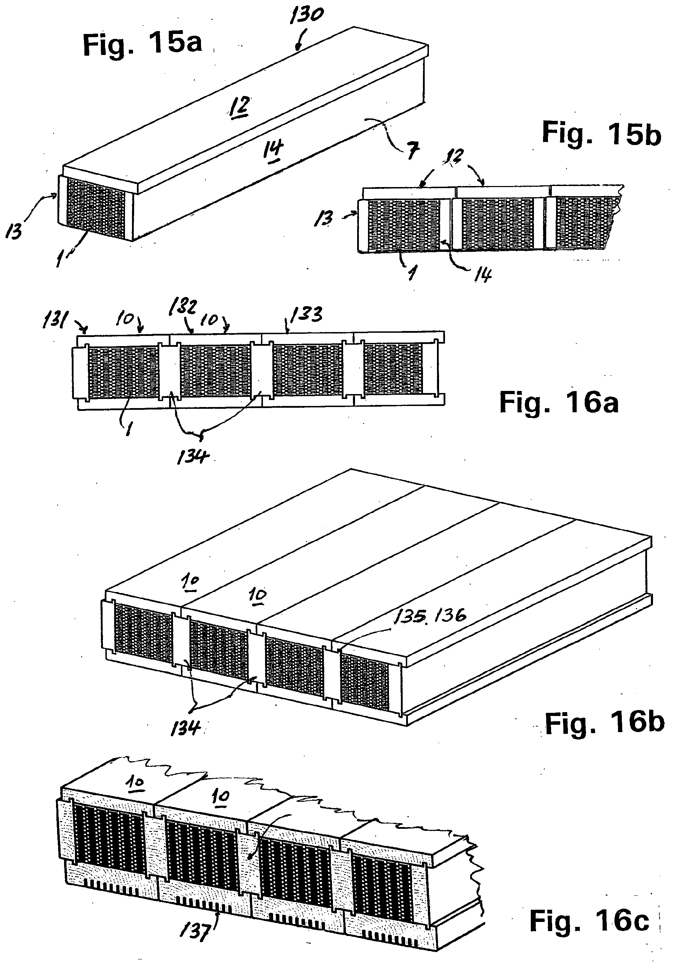

- die Figur 15a: ein Strukturelement bzw. Lamellenlängsprofil für die Anwendung als Zwischendecke bzw. Zwischenboden mit einseitig offenem Kasten. Die offene Seite wird hier bauseits verschlossen bzw. verkleidet;
- die Figur 15b: schematisch drei Strukturelemente als Verbund zusammengefügt;
- die Figur 16a: ein Verbund von vier Decken- bzw. Bodenelementen mit je geschlossenen Kasten und verstärkten senkrechten Planken:
- die Figur 16b: entspricht Figur 16a, jedoch in perspektivischer Darstellung;
- die Figur 16c: einen weiteren Ausgestaltungsgedanken, wobei die unteren Deckenbretter eine grosse Anzahl Schlitze für eine Dämmung bzw. für Schallschutz für den ganzen Raum aufweisen:

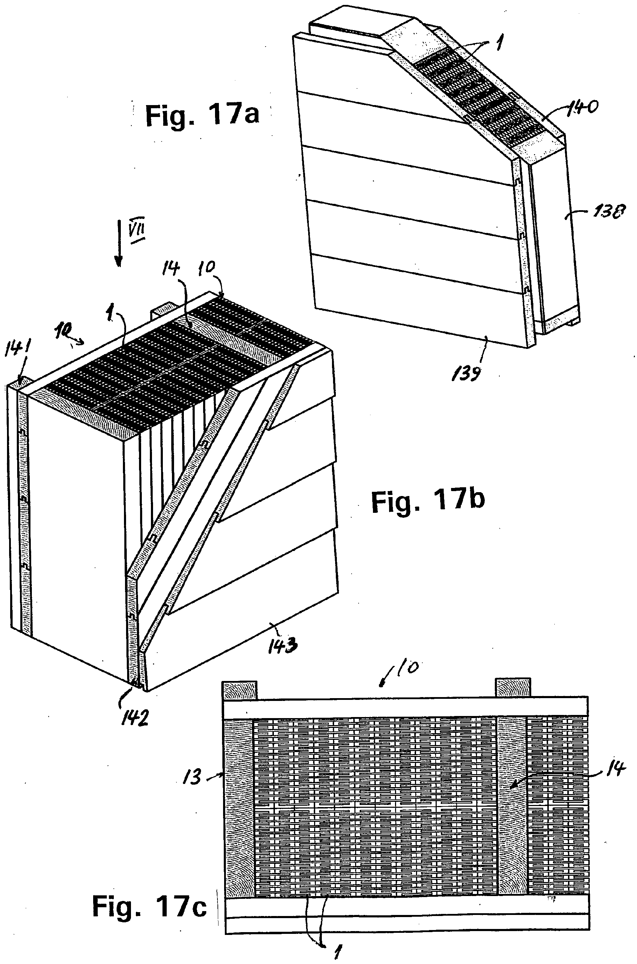

- die Figur 17a: ein Beispiel für die Anwendung des Strukturelementes als Wandelement mit einer Lage von Lamellenelementen;
- die Figur 17b: ein weiteres Beispiel für die Anwendung des Strukturelementes als Ausschnitt eines Wandelementes mit zwei Lagen von Lamellenelementen;
- die Figur 17c: eine Ansicht von oben der Figur 7b gemäss Pfeil VII;

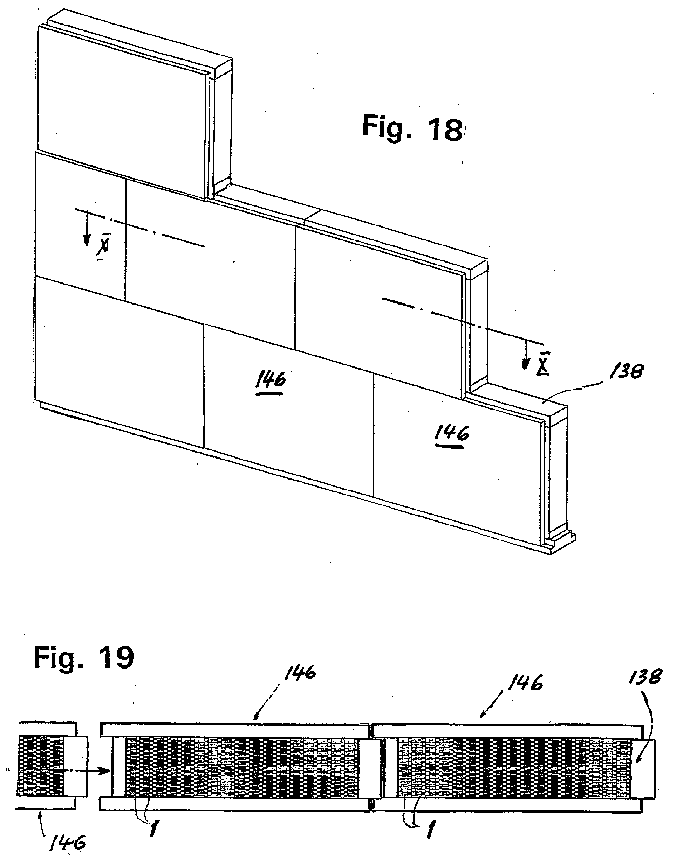

- die Figur 18 und 19: ein weiteres Beispiel eines Verbundes von Wandelementen mit einer Lage von Lamellenelementen als Stecksystem mit von Hand händelbaren Kleinplatten;

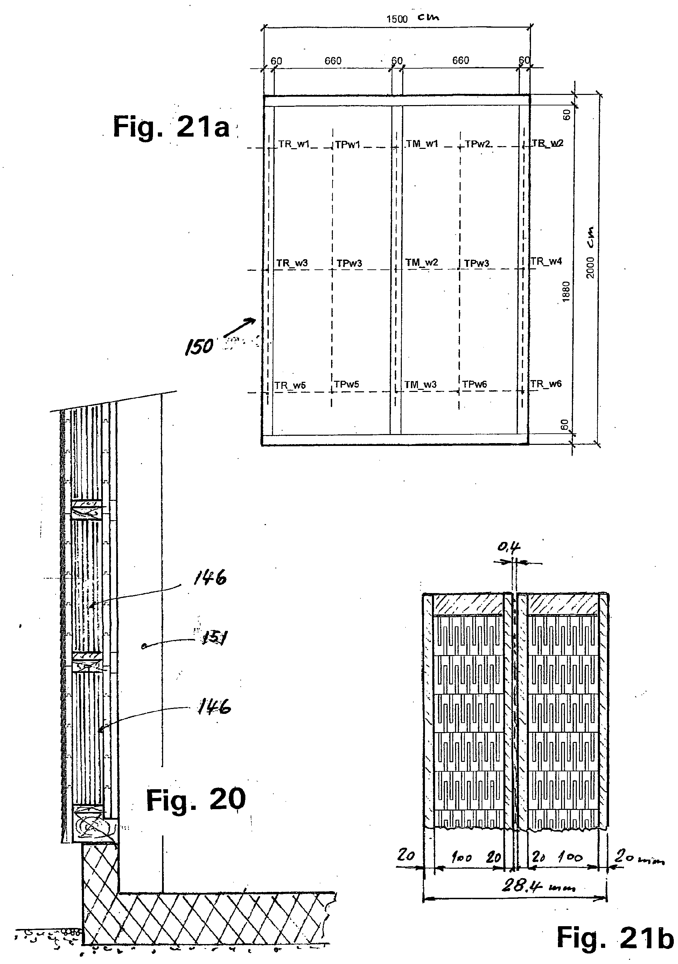

- die Figur 20: ein Einbaubeispiel von Wandelementen;
- die Figur 21a und 21b: das Prüfmuster für die Prüfung des Wärmedurchgangskoeffizienten.

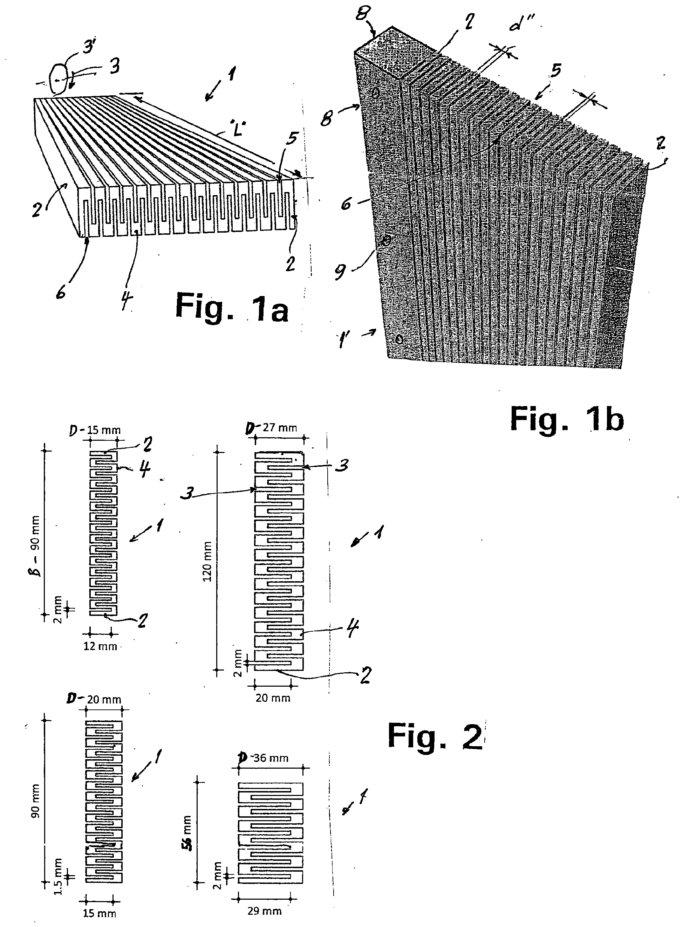

In der Folge wird auf die Figuren 1a und 1b Bezug genommen. Die Figur 1 a zeigt ein Lamellenelement 1 bzw. 1' in perspektivischer Darstellung. Lamellen 2 wurden erzeugt durch Einfräsungen, welche von beiden Seiten entsprechend Pfeilen 3 mittels angedeuteter Kreissägeblätter 3' dargestellt sind. Es ergibt sich dabei in Holzfaserlängsrichtung seitlich eine Vielzahl von offenen Längsschlitzen bzw. Nuten 5 und 6, solange das Lamellenelement nicht in einem Kasten 7 eingebaut ist (Figur 4c). In der Figur 1b ist ein Lamellenelement 1' dargestellt, welches einen zusätzlichen Rücken 8 aufweist, welcher die Form einer 4-kant-Leiste hat. Im übrigen sind die Lamellenelemente 1 der Figuren 1a und 1b identisch und bilden je ein Basismodul. Mit dem Bezugszeichen 9 ist angedeutet, dass eine Vielzahl von Lamellenelementen 1 für ein ganzes Strukturelement (10) verdübelt werden kann (Figur 4c). Die Dicke einer Lamelle ist mit d" bezeichnet.

Das Lamellenelement 1 bzw. 1' als Grundelement wird aus massiven Brettern, in der Regel Seitenware 31 der Holzarten Fichte, Weisstanne oder Buche, etc. auf einem Vierseitenhobelautomat profiliert (Figur 4a). Das Basismodul gemäss Figur 1b hat einen Rücken 8. Dieser kann für die Querverdübelung 9 der Lamellen benutzt werden, ähnlich einer verdübelten Brettstapelbauweise. Damit wird der Verbund rein mechanisch, selbst ohne Einsatz von Leimen, gewährleistet. Allerdings sind auch Verklebungen auf der Basis von z.B. emissionsfreien Silikatklebern möglich. Die Luftpolster gebildet durch die Längsschlitze 5, 6 als Luftkammern 39 (Fig. 14a, 14b) verbessern den Ä-Wert des Massivholzes bzw. den U-Wert der Konstruktion auf k = 0.064. In bionischer Analogie kann damit ein Bärenfell, mit der Haut auf der Innenseite und den nach aussen gerichteten Fellhaaren, hergestellt werden. Mit dem Bezugszeichen 4 sind die Stegkanten bezeichnet und verbinden nach aussen je zwei Lamellen 2. Die Längsseite eines Holzlamellenlängselementes ist mit "L" bezeichnet.

Die Figur 2 zeigt Beispiele von Querschnitten mit konkreten Massangaben von vier verschiedenen Lamellenelementen 1. Die angegebenen Masse können im Rahmen einer wirtschaftlichen Grössenordnung beliebig variieren. Der Grundcharakter ist jedoch immer der selbe. Die beiden herausstehenden Merkmale sind dünne Stege 2, bzw. Schlitze, welche durch entsprechende Einfräsungen von beiden Seiten hergestellt werden sowie die ausgeprägte Länge "L" eines Längsprofiles. Die Breite des Lamellenelementes 1 ist mit B und die Dicke mit D bezeichnet, entsprechend den Breitflächenkanten.

Die Figur 3a zeigt ein kurzes Muster mit den Lamellen 2 in unbelastetem Zustand. Die Figur 3b zeigt dasselbe Muster vollständig zusammengepresst. Bei den Figuren 3c und 3d ist das kurze Muster von Hand auf die eine, bzw. die andere Seite gebogen bzw. verformt. Die Figuren 3b, 3c und 3d zeigen im Sinne eines Demonstrationsmusters eine besondere Eigenschaft des Lamellenelementes 1.

Die Figuren 4a und 4b zeigen schematisch die Holzausnutzung bei einem Baumstamm. In dem Bereich des Kernholzes 30 kann die beste Qualität von Brettern für die Herstellung eines Kastens 7 bzw. als Bretter 11, 12, 13, 14, usw. verwendet werden. Die schlechtere Qualität 31 (Seitenware) wird genutzt für die Herstellung der Lamellenelemente 1.

Die Figur 4c zeigt schematisch ein Strukturelement 10 für den Einsatz als Wandelement unter einer senkrechten Belastung, entsprechend Pfeil P. Dadurch, dass die Lamellenelemente 1 vollständig in einen Kasten 7 eingeschlossen sind, tragen sie einen nicht unwesentlichen Teil der senkrechten Gebäudelast (P). Das einzelne Wandelement 10 genügt im Rahmen eines ganzen Wandverbundes allen statischen Anforderungen der Bautechnik, besonders wenn die Lamellenelemente in einem Kasten 7 eingeleimt sind.

Die Figur 5a zeigt ein ganzes Strukturelement 10 in der Anwendung des System- und Elementbaus. Das Strukturelement 10 weist aussen einen geschlossenen Kasten 7 und innen fünf Lamellenelemente 1 auf, welche in dem Kasten 7 vollständig eingeschlossen sind. Der Kasten 7 besteht aus je einem unteren Brett 11, einem oberen Brett 12 und zwei seitlichen Brettern 13 bzw. 14, welche über Schrauben 15 verbunden sind. Im eingebauten Zustand bildet jeder der Längsschlitze 5 und 6 je eine nach aussen geschlossene Luftkammer 39, was im Zusammenwirken die sehr hohe Wärmedämmung ergibt, wie sich aus dem später zitierten Prüfbericht zeigt. Die Hauptwärmedämmrichtung ist mit Pfeil 16 eingezeichnet (Figur 5c), z.B. für eine gute Isolation in Wand-, Decken- und Dachelementen, ein- oder mehrlagig und in beliebiger Kombination entsprechend bauseitigen Vorgaben (Figur 5c). Wichtig ist hier, dass das Strukturelement statisch hoch belastbar ist und eine ökologische Bauweise möglich ist.

Die Figur 5b zeigt die Anwendung für den Leichtbau als Füllmaterial in Leichtbauweise für alle Arten von Sandwichplatten wie Innen-Türen als Baucontainer- oder Wohnwagenbau. Als Beschichtung könnte beispielsweise Aluminium oder jede andere Platte verwendet werden. Wichtig ist hier, dass das Produkt eine gemäss Figur 5b eine eher geringe Isolation bei wenig Gewicht bietet.

Eine Lösung gemäss Figur 5c weist schon einen guten Wert in Bezug auf die Isolation auf. Die Luftkammern 39 liegen im Falle einer Wärmedämmung immer quer zur Wärmedämmrichtung 16, sodass eine Vielzahl von Schlitzen, bzw. Luftkammern 39 gebildet werden, durch die der Wärmefluss stark gebremst wird.

Die Figur 5d zeigt einen Vertikalschnitt eines Fensters in der Anwendung im Fensterbau. Als Dämm- und Füllmaterial im Tür- und Fensterbau eignet sich das Produkt dank der vielen guten Eigenschaften besonders für Rahmenverbreiterungen oder als Türfüllung, vor allem als Ersatzbaustoff für Dämmungen auf Kunststoff-, Glas- oder Mineralwollenbasis. Die jüngste Entwicklung hat gezeigt, dass die Fensterrahmen bzw. Fensterwände, sei es in Holz, Kunststoff oder Metall, in Bezug auf die Wärmedämmung häufig die eigentliche Schwachstelle bei Gebäudefassaden sind. In den Fensterflügelrahmen 20 können mehrere Lamellenelemente eingesetzt werden. Je nachdem, aus welchem Material der Fensterflügelrahmen besteht, können Lamellenelemente 1 eingebracht, bzw. eingeleimt werden. Das gleiche gilt für den Fensterrahmen 21.

Die Figur 5e zeigt die Anwendung für Akustiksysteme. Als Auskleidung für Akustikräume dienen die Lamellenelemente 1 für die Schall- und Wärmedämmung.

Die Figur 5f zeigt ein Beispiel für die Anwendung der Lamellenelemente 1 für die Bausanierung in Bezug auf die nachträgliche Isolation als natürlichen Dämmstoff für Innen- und Aussenmontage. Wichtig ist hier, dass die Lamellenelemente 1 die Feuchtigkeit beispielsweise von Beton- oder Massivbaumauerwerken optimal regulieren und dadurch ein behagliches Raumklima schaffen.

Die Figur 5g zeigt den Einsatz für Betonverschalungen, beispielsweise für Rundstützen 50 oder Formteile für Treppen in Beton, usw. Bei Aussenradien werden die Fugen mit Gips ausgefugt, um eine glatte Oberfläche zu erhalten. Eine weitere Einsatzmöglichkeit ist die Anwendung als Schablone für Betonschalungen z. B. im Betontreppenbereich. Gewundene Schalungen können durch flexible Lamellen in Keilform aufgebracht und befestigt werden. Wichtig hier ist das flexible Aufbringen des Produktes. Dadurch kann das Schneiden von Keilen erspart werden, und man erhält, beispielsweise bei gewundenen Treppen, einen sauberen Schwung.

Die Figur 5h zeigt eine weitere mögliche Anwendung im Verpackungsbereich. Die Lamellenelemente 1 dienen zum Schutz von zerbrechlichen Teilen und Materialien, beispielsweise für Flaschen 51. Ausserdem wird durch die Dämmung mit dem System ein Effekt wie bei der Thermoskanne erzielt.

Generell werden die Lamellenelemente aus einem möglichst preisgünstigen Rohstoff wie Zweitklass-Holz ausgearbeitet, aus Rohstoffen wie Seitenbretter, die bisher nur in sehr untergeordneten Bereichen eingesetzt werden konnten. Wichtig sind hier die Luftkanäle (Fräsungen), welche dem Endprodukt die gewünschten Eigenschaften verleihen. Die Schlitze sowie die Lamellen bzw. Stege müssen versetzt zueinander angeordnet und im Bereich von 1 mm bis 5 mm vorzugsweise 1 - 3 mm breit sein, damit die besonderen Produkteigenschaften gewährleistet sind. Als Produktvarianten stehen, je nach Anforderung des Endproduktes oder der Kundenwünsche, sämtliche Masse und Varianten zur Verfügung. Wichtig ist die Art der Schlitze und dass keine grossflächige Luftzirkulation entstehen kann, da sich sonst die Wärme- und Schallwirkung abschwächen würde. Ganz kurze Reste von Lamellenelementen können z.B. für das Entfachen eines Feners verwendet werden.

Die Figur 6 zeigt schematisch die Produktion der Holzlamellenlängsprofile 1, welche im Durchlaufverfahren hergestellt werden. Auf der rechten Seite ist je ein oberer Fräskopf 40 sowie ein unterer Fräskopf 41, welche je aus einer Anzahl Kreissägeblättern 42 bestehen, entsprechend der Anzahl Nuten 5, 6 in den einzelnen Lamellenelementen 1. Je nach besonderer Holzqualität können die Kreissägeblätter auf die eine oder andere Seite angetrieben sein. Links im Bild sind zwei Bearbeitungswalzen 43, 44 dargestellt, mit denen beispielsweise für Lamellenelemente für einen ästhetischen Effekt eine zusätzliche Oberflächenbearbeitung gemacht werden kann. Die Bearbeitungsköpfe werden insbesondere als Flächenhobelköpfe 43, 44 sowie Seitenhobelköpfe 45, 46 ausgebildet. Mit einem zusätzlichen Hobelkopf 47 kann am Lamellenelement in der Dicke "D" noch 1 - 2 Zehntel Millimeter abgenommen werden, dies um eine möglichst exakte Dicke "D" zu erhalten. Die beiden Fräsköpfe 40, 41 werden um ein Mass "X" versetzt zueinander angeordnet, das zum Beispiel etwa 20 cm betragen kann. Dabei ist der erste Fräskopf 40 zurückversetzt. Im Regelfall erstrecken sich die Nuten 5, 6 über die ganze Länge der Holzlamellenelemente 1. In Sonderfällen können jedoch auch die Nuten nur über einen Teilbereich eingefräst werden.

Die neue, erfindungsgemässe Lösung gestattet für Sonderfälle Lamellenelemente nur teilweise mit Längsschlitzen bzw. Nuten herzustellen, sei es in der Länge oder in der Breite. Das Lamellenelement kann je nach Einsatzgebiet entweder vollständig naturbelassen werden, oder einer Imprägnierung oder einer Oberflächenbehandlung unterzogen werden.

Die Figur 7 zeigt einen Fensterflügel 60, ohne den Einbau von Lamellenelementen. Dagegen ist das obere Fensterwandteil 61 sowie das untere Fensterwandteil 62 mit Lamellenelementen 1 versehen. Entsprechend der Figur 1 handelt es sich um ein Fenster mit Zweifachverglasung. Die Kanteln 63 weisen keine Lamellenelemente auf.

Die jüngste Entwicklung hat gezeigt, dass die Fensterrahmen, sei es in Holz, Kunststoff oder Metall, in Bezug auf die Wärmedämmung die eigentliche Schwachstelle bei Gebäudefassaden sind. Je nachdem, aus welchem Material der Fensterrahmen besteht, werden fabrikationstechnisch die Lamellenelemente in Strukturelemente 10 eingebracht. Das gleiche gilt für den Fensterflügelrahmen bzw. für die Flügelkanteln und die Rahmenkanteln.

Die Figur 8 stellt eine Wandecke dar, welche aus Wandstrukturelementen 68 entsprechend dem Stand der Technik errichtet wurde. An der Innenseite 63 sind Installationen sowie ein Putzträger 64 angebracht. An der Aussenseite ist ein Wandpapier 65 sowie eine Stulpschalung 66 angebracht. Mit den Pfeilen 67 ist die Wärmedämmrichtung angedeutet.

Die Figuren 9a und 9b zeigen Platten bzw. Türblättern 69. Eine ganze Anzahl Lamellenelemente 1 sind eingesetzt zwischen zwei Schalen 70, 71. Ganz oben ist ein Umleimer 72 dargestellt. Bei der Figur 9b handelt es sich um Türblätter 78 als Leichtbauplatten.Die Verwendung ist vor allem für einen Leichtbau im Hausbau als Innentüren oder im Containerbau. Die Platten können aber auch für Zwischenwände Verwendung finden. Das besondere ist hier, dass die Vielzahl von Lamellenelementen für eine Erhöhung der Stabilität der ganzen Platte und weniger für eine Wärmedämmung genutzt werden.

Die. beiden Figuren 10a und 10b zeigen ein Türblatt 78 als Ausschnitt.

Die Figuren 11a und 11b zeigen ein Beispiel einer Rahmenverbreitung 79 für Türen oder Fenster. Es handelt sich dabei in der Regel nur um einzelne Elemente. In beiden Fällen ist eine gute Wärmedämmung gewünscht, deshalb werden die Lamellenelemente 1 analog zu den Lösungen gemäss Figuren 1 bis 3 mit der grösstmöglichen Anzahl von geschlossenen Luftkammern in der Hauptwärmedämmrichtung eingesetzt. Beim Umleimer 72 fehlt der Falz.

In der Figur 12 ist im oberen Bildteil ein ganzes Element als Rahmenverbreiterung 79. Zwischen der Rahmenverbreiterung 79 sowie einem Fensterrahmen 81 ist eine Fensterrahmenverbreiterung 80 dargestellt.

Die Figur 13 zeigt einen Schnitt durch ein Fenster als weiteres Beispiel mit einem Fensterrahmen 82 sowie Fensterflügel 83. Mit der gezeigten Lösung ist jeder der Fenster- und Rahmenkanteln geteilt. Es können bei den Fensterflügeln 83 separate Glasstäbe weggelassen werden, da die Glasstäbe Teil der Rahmenkanteln 84 sind.

Die Figur 14 zeigt ein weiteres Beispiel für den Einbau von erfindungsgemässen Wärmeisolierenden Holzbauelementen. Im oberen Bildteil (rechts) ist ein Fenster 111 dargestellt in dem ein einzelnes Lamellenelement 1 eingepasst ist. Ein Rahmenkantel 100 ist zweigeteilt in einen inneren Rahmenteil 101 sowie einen äusseren Rahmenteil 102. Der Fensterrahmen 103 ist ebenfalls zweigeteilt, mit einem inneren Fensterrahmenteil 105 sowie einem äusseren Fensterrahmenteil 104. Der Fensterrahmen 103 ist angeschlagen an ein Wandstrukturelement 106 und ist abgedichtet (Bezugszeichen 108) sowohl gegenüber dem Wandstrukturelement 106 sowie gegenüber einem Stückbalken 107. Im Fensterrahmen 103 sind drei Lamellenelemente 1 eingepasst. Im Fensterflügelrahmen 109 ist ein Lamellenelement 1 eingepasst, wobei die Lamellenelemente 1 in allen vier Rahmenkanteln angeordnet sind. Die grosse Zahl von Luftkammern ist mit 119 bezeichnet.

Die Figur 14 zeigt den Einsatz der erfindungsgemässen Wärmedämmung für den Fensterbau. Die jüngste Entwicklung hat gezeigt, dass die Fensterrahmen, sowie der Übergang von der Wand, sei es in Holz, Kunststoff oder Metall, in Bezug auf die Wärmedämmung die eigentliche Schwachstelle bei Gebäudefassaden sind. Je nachdem, aus welchem Material der Fensterrahmen besteht, werden fabrikationstechnisch die Lamellenelemente in Strukturelemente 112 eingebracht. Das gleiche gilt für den Fensterflügelrahmen bzw. für die Flügelkanteln und die Rahmenkanteln. Die Figur 14 zeigt ferner ein ganzes Strukturelement 112. Das Strukturelement 112 weist aussen einen geschlossenen Kasten 7 und eine Vielzahl Lamellenelemente 1 auf, welche in den Kasten 7 vollständig eingeschlossen sind. Der Kasten 7 besteht aus je einem unteren Brett 113, einem oberen Brett 115 und zwei seitlichen Brettern 116 bzw. 117, welche über Schrauben 118 verbunden sind. Im eingebauten Zustand bildet jeder der Längsschlitze 5 und 6 je eine nach aussen geschlossene Luftkammer 119, was im Zusammenwirken die sehr hohe Wärmedämmung ergibt.

Die Figuren 15 bis 20 zeigen verschieden ausgestaltete Strukturelemente als Basismodule für je unterschiedliche Einsätze. Mit den Standardmodulen lassen sich Einzelsysteme zu Doppel- und Mehrfachsystemen kombinieren. Damit können die Gebäude-Aussenhüllen erstellt werden, die monolithisch ohne Zusatzschichten für die Wärmedämmung im Minergiestandard und darüber garantieren. Dank dem Doppelkammersystem lässt sich eine bionische Analogie zum Wespennest herstellen. Die Konstruktion basiert an diesem Vergleichsobjekt auf mehrschichtigen Papierhüllen mit Luftkammern. Die Wespen können damit eine konstante Bruttemperatur von 29 Grad Celsius gewährleisten. Beim Doppelmodul gemäss Figur 15a und 15b ist der Kasten 7 nur auf 3 Seiten geschlossen. Die vierte Seite wird durch eine bauseitige Wandverkleidung, z.B. Gipsplatten für verputzte Wände, hergestellt.

Die Figuren 15a bis 16c zeigen das Kastenbaukonzept im Einsatz als Boden- und Deckenelemente. Damit die Schubübertragung gewährleistet ist, kann eine zusätzliche oder massivere Planke 120 eingebaut werden. Zudem kann eine Verdübelung und / oder Verleimung der Rücken, beispielsweise mit Silicot (baubiologisch unbedenklich) vorgenommen werden. Zur Erhöhung der Biegesteifigkeit können auch Balken 134 als Planken eingesetzt werden.

Die Figuren 15a und 15b zeigen ein Standardmodul 130. Dabei ist der Kasten 7 nur auf drei Seiten geschlossen. Als Deckenmaterial kann irgend ein Deckenmaterial gewählt werden. In der Regel ist bei dieser Ausgestaltung die Decke nicht belastet. Bei der Figur 15b sind drei Module zusammengesteckt.

Die Figuren 16a bis 16c zeigen je ein Elementverbund 131 bzw. 132, 133 usw. für einen Boden oder für eine Deckenkonstruktion. Dabei sind je vier Einzelelemente bzw. Strukturelemente 10 in der Regel über Verbindungsschrauben zusammengefügt. Diese Lösung ist geeignet für stark belastete Decken oder Böden. Zur Verstärkung ist jedes einzelne Element mit den nächsten über je einen vertikalen Balken bzw. dicke Plankenbretter 134 vorgesehen, welche über eine Nut- und Kammverbindung 135, 136 stabil verbunden sind. Eine weitere Sonderheit ist in der Figur 6c durch Dämmschlitze 137. Damit kann der Raumschall spürbar reduziert werden. Für die bauseitige Montage können beliebig viele Strukturelemente 131, 132,133, usw. zusammengefügt werden, wobei die einzelnen Elementverbunde über irgendwelche Spannmittel zusammengefügt werden.

Die Figuren 17a bis 17c zeigen Ausschnitte von Strukturelementen für Wände.

Die Figur 17a zeigt ein Strukturelement 10 mit nur einer Lage von Lamellenelementen 1. Das Strukturelement 10 ist rundum eingefasst mit einem starken Umleimholz 138, sowie nach innen und nach aussen mit einer Brettverschaltung 139 und 140, wobei die äussere und innere Verschalungen bauseits angebracht werden können. Die Lösung gemäss Figur 17a ist für Anwendungen mit weniger grossen Ansprüchen für die Wärmedämmung konzipiert. Anstelle einer Brettverschaltung kann jedes beliebige Wandplattenmaterial verwendet werden.

Bei den Figuren 17b und 17c sind zwei Lagen von Lamellenelementen 1 dargestellt. Es handelt sich um den typischen Falle einer Aussenwand mit grosser Wärmedämmwirkung. Auch hier kann je ein Verbund von einzelnen Strukturelementen 10 angewendet werden, entsprechend den Figuren 16a bis 16c. Nach innen ist eine Lattung 141 für einen Putzträger angeordnet. Nach aussen können Stulpschalungen 142 und 143 angeordnet werden.

Die Figur 18 zeigt Wandelemente im Übergang zu einem Fenster. Die jüngste Entwicklung hat gezeigt, dass Fensterrahmen, sei es in Holz, Kunststoff oder Metall, in Bezug auf die Wärmedämmung die eigentliche Schwachstelle bei Gebäudefassaden sind. Die Figuren 18 und 19 zeigen eine weitere interessante Ausgestaltung bei der die Kleinplatten 146 von Hand zu einer ganzen Wand zusammengesteckt werden. Diese Lösung ist besonders dort interessant für Baustellen, wo für einen ganzen Wandaufbau zu wenig Platz vorhanden ist für das Aufstellen eines Baukranes. Die Kleinplatten können in beliebigen Grössen herstellt werden, z.B. 1 Meter auf 0,5 Meter. Grundsätzlich können die Kleinplatten auch mit zwei Lagen Lamellenelementen gebaut werden.

Die Figur 20 zeigt ein Einbaubeispiel von Wandelementen 146 an einer bestehenden Wand 151.

In der Folge wird auf die Figuren 21 und 22 Bezug genommen. Es handelt sich um Auszüge aus einem staatlichen Prüfprotokoll (EMPA) für die Bestimmung des Prüfkörper-Wärmedurchgangskoeffizienten. Die Figur 12a zeigt die Grössenabmessungen einer Wandplatte 150. Die Figur 12b zeigt einen Schnitt durch die Platte 150 der Figur 12a mit Massangaben.

| **Nettowärmestrom durch Prüfkörper ΦF** | [**W**] | **13.08** |
|---|---|---|
| Gesamtwärmeübergangswiderstand R_{s, tot} | [m²K/W] | 0.185 |
| Strahlungstemperatur warmseitig θᵣᵢ | [°C] | 22.78 |
| Strahlungstemperatur kaltseitig θᵣₑ | [°C] | 3.03 |
| Umgebungstemperatur warmseitig θₙᵢ | [°C] | 22.89 |
| Umgebungstemperatur kaltseitig θₙₑ | [°C] | 2.97 |
| Umgebungstemperaturdifferenz θₙᵢ | [°C] | 19.93 |

| **Prüfergebnis** | | |
|---|---|---|
| Gemessener Wärmedurchgangskoeffizient U_{F,m} | [W/ m²K] | 0.22 |
| Messunsicherheit ΔU_{F,m} | | ± 0.02 |

## Patentansprüche

1. Holzstrukturelement (10) mit hoher Wärmedämmung für den Bereich von Gebäudefassaden und/oder Dächern und/oder Zwischendecken und/oder -wänden oder Fenster oder Türen, mit mehreren darin eingelegten, als Lamellenlängsprofil ausgebildeten Lamellenelementen (1), welche jeweils beidseitig je gegenseitig versetzt angeordnete Nuten (5,6) aufweisen und die sich bildende Vielzahl von Lamellen (2) handorgelartig aussen verbunden sind, wobei die mehreren Lamellenelemente gemeinsame Kontaktflächen aufweisen, wobei die Dicke d" der Lamellen und der entsprechenden Nuten 1 bis 5mm beträgt, wobei das Holzstrukturelement einen Kasten (7) aufweist, in welchen die mehreren Lamellenelemente (1) eingelegt sind, wobei die Nuten (5,6) der Lamellenelemente mit dem Kasten (7) eine entsprechende Vielzahl von geschlossenen kleinen Luftkammern (119) bilden, welche einen etwa rechteckförmigen oder spitzwinkligen Querschnitt aufweisen und wobei die Nuten (5,6) senkrecht zu den Kontaktflächen verlaufen, wobei die kürzere Abmessung der Luftkammern in der Hauptwärmedämmrichtung (38) aus- gerichtet ist, so dass eine Luftzirkulation unterbunden wird und sich eine hohe Wärmedämmung ergibt.

2. Holzstrukturelement nach Anspruch 1, **dadurch gekennzeichnet, dass** ein Lamellenelement eine Breite (B) von 4cm bis 20cm, besonders vorzugsweise im Bereich zwischen 5cm bis 15cm und eine Länge (L) von 0,4m bis 5m sowie eine (Brettholz) Dicke von mehr als 1cm aufweist.

3. Holzstrukturelement nach Anspruch 1 oder 2, **dadurch gekennzeichnet, dass** die Nuten eine Tiefe von 10 bis 50mm aufweisen.

4. Holzstrukturelement nach einem der Ansprüche 1 bis 3, **dadurch gekennzeichnet, dass** es als Türblatt (70) ausgebildet ist, in welchem eine Vielzahl von Lamellenelementen eingeleimt sind.

5. Holzstrukturelement nach einem der Ansprüche 1 bis 3, **dadurch gekennzeichnet, dass** es als Rahmenkantel mit je eingeleimtem Lamellenelement ausgebildet ist.

6. Holzstrukturelement nach Anspruch 5, **dadurch gekennzeichnet, dass** es als Tür- oder Fensterrahmen ausgebildet ist, mit umfassenden Rahmenkantel bzw. Stockrahmen mit eingepassten Lamellenelementen.

7. Holzstrukturelement nach einem der Ansprüche 1 bis 3, **dadurch gekennzeichnet, dass** es als Platte für ein Stecksystem mit Umleimer (72) für jede Platte in Grössen ausgebildet ist, welche von Hand handhabbar sind.

8. Holzstrukturelement nach Anspruch 7, **dadurch gekennzeichnet, dass** die Umleimer (72) zu der Platte stirnseitig bzw. zurückstehend ausgebildet sind, derart, dass die Platten in entsprechendem Stirnbereich zusammensteckbar sind.

9. Holzstrukturelement nach Anspruch 7 oder 8, **dadurch gekennzeichnet, dass** bei einem Verbund von einer Vielzahl von Platten für eine Wand die einzelnen Platten versetzt angeordnet sind.

10. Holzstrukturelement nach einem der Ansprüche 1 bis 3, **dadurch gekennzeichnet, dass** es als Deckenelement in der Art eines Deckenbalkens mit vertikalen blanken Brettern ausgebildet ist, wobei der Kasten in Längsrichtung geschlossen ausgebildet ist.

11. Holzstrukturelement nach Anspruch 10, **dadurch gekennzeichnet, dass** die vertikalen blanken Bretter seitlich je vorstehend bzw. rückstehend angebracht sind, derart, dass beim Zusammenfügen einer Vielzahl von Deckenelementen für eine ganze Decke, diese ein Stecksystem bilden.

12. Holzstrukturelement nach Anspruch 10 oder 11, **dadurch gekennzeichnet, dass** mehrere einzelne Deckenelemente (191,132,133) als Verbund zusammengefügt sind, wobei die mittleren Planken aufrecht stehende Balken (134) sind, welche mit je zwei Boden- bzw. Deckenbrettern über Nut- und Kamm (135,136) verbunden sind, wobei die vertikalen blanken Bretter (134) seitlich je vorstehend bzw. rückstehend abgebracht sind, derart, dass beim Zusammenfügen einer Vielzahl von Deckenelementen (131,132,133) für eine ganze Decke, diese ein Stecksystem bilden.

13. Holzstrukturelement nach einem der Ansprüche 1 bis 12, **dadurch gekennzeichnet, dass** die Lamellenelemente aus der Seitenware eines Baumstamms hergestellt sind.

## Claims

1. A wooden structural element (10) with high heat insulation for the area of building facades and/or roofs and/or false ceilings and/or walls or windows or doors, comprising a plurality of lamellar elements (1), which are embodied as lamellar longitudinal profile inserted therein and which in each case have grooves (5, 6), each of which are arranged mutually offset on both sides and the plurality of lamellae (2), which is formed, is connected on the outside in an accordion-like manner, wherein the plurality of lamellar elements have common contact surfaces, wherein the thickness d" of the lamellae and of the corresponding grooves is between 1 and 5 mm, wherein the wooden structural element has a box (7), into which the plurality of lamellar elements (1) are inserted, wherein the grooves (5, 6) of the lamellar elements form a corresponding plurality of closed small air chambers (119) with the box (7), which have a rectangular or acute-angled cross section and wherein the grooves (5, 6) run perpendicular to the contact surfaces, wherein the shorter dimension of the air chambers is oriented in the main heat insulation direction (38), so that an air circulation is suppressed and a high heat insulation results.

2. The wooden structural element according to claim 1, **characterised in that** a lamellar element has a width (B) of between 4 cm and 20 cm, particularly preferably in the range of between 5 cm and 15 cm and a length (L) of between 0.4 m and 5 m, as well as a (wooden board) thickness of more than 1 cm.

3. The wooden structural element according to claim 1 or 2, **characterised in that** the grooves have a depth of between 10 and 50 mm.

4. The wooden structural element according to any one of claims 1 to 3, **characterised in that** it is embodied as door leaf (70), into which a plurality of lamellar elements is glued.

5. The wooden structural element according to any one of claims 1 to 3, **characterised in that** it is embodied as frame scantling in each case comprising lamellar elements, which are glued in.

6. The wooden structural element according to claim 5, **characterised in that** it is embodied as door or window frame, comprising encompassing frame scantling or building frame, respectively, comprising fitted lamellar elements.

7. The wooden structural element according to any one of claims 1 to 3, **characterised in that**, as plate for a plug-in system comprising edge veneer (72), it is embodied in sizes, which can be handled by hand, for each plate.

8. The wooden structural element according to claim 7, **characterised in that** the edge veneer (72) are embodied frontally or so as to be recessed, respectively, to the plate in such a way that the plates can be plugged together in the corresponding frontal area.

9. The wooden structural element according to claim 7 or 8, **characterised in that** the individual plates are staggered in reversed order in the case of a group of a plurality of plates for a wall.

10. The wooden structural element according to any one of claims 1 to 3, **characterised in that** it is embodied as ceiling element in the manner of a ceiling beam comprising vertical uncoated boards, wherein the box is embodied so as to be closed in the longitudinal direction.

11. The wooden structural element according to claim 10, **characterised in that** the vertical uncoated boards are in each case attached so as to protrude laterally or so as to be recessed, respectively, in such a way that when joining a plurality of ceiling elements for a complete ceiling, they form a plug-in system.

12. The wooden structural element according to claim 10 or 11, **characterised in that** a plurality of individual ceiling elements (191, 132, 133) are joined as group, wherein the middle planks are upright beams (134), which are in each case connected to two floor or ceiling boards, respectively, via groove and ridge (135, 136), wherein the vertical uncoated boards (134) are in each case attaches to as protrude laterally or so as to be recessed, respectively, in such a way that, when joining a plurality of ceiling elements (131, 132, 133) for a complete ceiling, they form a plug-in system.

13. The wooden structural element according to any one of claims 1 to 12, **characterised in that** the lamellar elements are made from the side boards of a tree trunk.

## Revendications

1. Elément de structure en bois (10) avec forte isolation thermique pour la zone de façade de bâtiments et/ou de toits et/ou de plafonds suspendus et/ou de cloisons de séparation, ou de fenêtres et de portes avec plusieurs éléments en lamelles (1) qui y sont établis sous la forme d'un profilé longitudinal de lamelles, lesquelles lamelles sont respectivement placées de chaque côté sur des rainures en décalage (5,6) et dont le nombre multiple de lamelles (2) est relié sur l'extérieur en une forme d'accordéon, dans lequel cas les multiples éléments de lamelles affichent des surfaces communes de contact, dans lequel cas l'épaisseur d" des lamelles et des rainures représente 1 à 5 mm, dans lequel cas l'élément de structure en bois affiche un boitier (7) dans lequel les multiples éléments de lamelles (1) sont posés dans lequel cas les rainures (5,6) des éléments de lamelles forment avec le boitier (7) une multitude correspondante de petites poches d'air fermées (119) lesquelles affichent une section rectangulaire ou à angle aigu, dans lequel cas les rainures (5,6) passent à la verticale des surfaces de contact, dans lequel cas le coté le plus court des poches d'air dans le dispositif principal d'isolation thermique (38) est disposé d'une telle manière à éviter une circulation d'air et ainsi à donner une forte isolation thermique.

2. Elément de structure en bois selon la revendication 1, **caractérisé en ce qu'**un élément de lamelles affiche une largeur (B) de 4 cm à 20 cm, en particulier de préférence dans une étendue entre 5 cm et 15 cm et une longueur (L) de 0,4 m à 5 m tout comme une épaisseur (bois en planches) de plus d'1 cm.

3. Elément de structure en bois selon la revendication 1 ou 2 **caractérisé en ce que** les rainures affichent une profondeur de 10 à 50 mm.

4. Elément de structure en bois selon une des revendications 1 à 3 **caractérisé en ce que** celui-ci est façonné sous la forme de battant de porte (70) dans lequel un grand nombre d'éléments de lamelles est collé.

5. Elément de structure en bois selon une des revendications 1 à 3 **caractérisé en ce que** celui-ci est façonné sous la forme de carrelet de cadre avec chacun des éléments en lamelles collées.

6. Elément de structure en bois selon la revendication 5, **caractérisée en ce que** celle-ci est façonné en tant que cadre de fenêtre ou de porte, englobant un carrelet de cadre ou un cadre dormant avec des éléments encastrés de lamelles.

7. Elément de structure en bois selon une des revendications 1 à 3 **caractérisé en ce que** celui-ci est façonné en tant que plaque pour un système à emboiter avec bordure (72) pour chaque plaque dans des dimensions qui peuvent être maniées à la main.

8. Elément de structure en bois selon la revendication 7, **caractérisé en ce que** les bordures (72) sont conçues vers l'avant ou en retrait de telle manière que les plaques peuvent être emboitées dans la zone frontale correspondante.

9. Elément de structure en bois selon les revendications 7 ou 8, **caractérisé en ce que** lors d'un groupement d'un grand nombre de plaques pour une paroi, les plaques individuelles sont disposées de manière décalée.

10. Elément de structure en bois selon un des revendications 1 à 3, **caractérisé en ce que** celui-ci est façonné en élément de plafond sous la forme de poutre avec planches nues à la verticale, dans lequel cas le boitier est conçu de manière fermée dans le sens de la longueur.

11. Elément de structure en bois selon la revendication 10 **caractérisé en ce que** les planches verticales nues sont chacune latéralement disposées vers l'avant ou vers l'arrière de telle manière que celles-ci forment un système lors de la combinaison de plusieurs éléments de plafond.

12. Elément de structure en bois selon la revendication 10 ou 11 **caractérisé en ce que** plusieurs éléments de plafond (191, 132, 133) sont combinés en un module, dans lequel cas les poutres à la verticale des planches centrales (134) sont reliées à chacune deux planches de sol ou de plafond au moyen des crêtes et de rainures (135, 136) dans lequel cas les planches verticales nues (134) sont chacune placées vers l'avant ou bien vers l'arrière de telle manière qu'un système à emboiter est formé en combinant plusieurs éléments de plafond (131, 132, 133).

13. Elément de structure en bois selon une des revendications 1 à 12 **caractérisé en ce que** les éléments de lamelle sont façonnées du flanc d'un tronc d'arbre.
